Europäisches Patentamt

European Patent Office

Office européen des brevets

(11) Publication number: **0 128 015 B1**

(12) EUROPEAN PATENT SPECIFICATION

(45) Date of publication of patent specification: **16.08.89**

(51) Int. Cl.⁴: **A 21 C 3/02**

(21) Application number: **84303666.6**

(22) Date of filing: **31.05.84**

(54) Dough stretching.

(30) Priority: **01.06.83 JP 95816/83**

(43) Date of publication of application:
**12.12.84 Bulletin 84/50**

(45) Publication of the grant of the patent:
**16.08.89 Bulletin 89/33**

(84) Designated Contracting States:
**AT BE CH DE FR GB IT LI LU NL SE**

(56) References cited:
**DE-A-2 735 142**
**FR-A-1 085 395**
**FR-A-1 094 103**
**FR-A-2 321 240**
**GB-A-1 221 127**
**US-A-4 266 920**

(73) Proprietor: **RHEON AUTOMATIC MACHINERY CO. LTD.**
**2-3, Nozawa-machi**
**Utsunomiya-shi Tochigi-ken (JP)**

(72) Inventor: **Hayashi, Torahiko**
**3-4 Nozawa-machi**
**Utsunomiya-shi Tochigi-ken (JP)**

(74) Representative: **Leale, Robin George et al**
**FRANK B. DEHN & CO. Imperial House 15-19 Kingsway**
**London WC2B 6UZ (GB)**

Courier Press, Leamington Spa, England.

## Description

This invention relates to the stretching of dough, such as cake dough, bread dough, noodle dough or the like, and particularly to an apparatus and method for continuously stretching a strip of dough, supplied in the shape of a thick layer, into a thin sheet.

Apparatus for this purpose is well known from, for example the disclosures of U.S. Patent Specifications Nos. 4,056,346, 4,276,317, and 4,192,636. In these U.S. Patent Specifications there is disclosed an apparatus for continuously stretching a strip of dough, comprising:

a belt conveyor mechanism comprising a plurality of belt conveyors arranged in series, the upper flights of which are adapted to underlie and support the strip of dough to carry it along a predetermined path, said series of belt conveyors including an entrance belt conveyor for feeding the strip of dough into the apparatus, and an exit belt conveyor for discharging the stretched strip of dough from the apparatus, the exit belt conveyor being movable faster than the entrance belt conveyor; and

a roller mechanism comprising a plurality of freely rotatable rollers movable in unison along an endless roller path, the outer peripheral parts of the moving rollers forming a closed envelope having a lower straight portion spaced from and above the upper flights of said series of belt conveyors so that the rollers contact the strip of dough during their movement along said lower straight portion, the rollers being arranged to move in the same direction as the strip of dough when passing along said lower straight portion but at a speed greater than that of the said strip;

the upper flight of the said exit belt conveyor being located substantially parallel to said lower straight portion to define a predetermined vertical spacing therebetween; and

the upper flight of the entrance belt conveyor being located either parallel to, or in a tapering relationship with, said lower straight portion to define a predetermined vertical spacing between the starting point of said lower straight portion, or points adjacent thereto on the said envelope, and the upper flight of the entrance belt conveyor.

In order to obtain a stretched dough sheet having a desired thickness, it is often required to control the vertical spacing between the upper flight of the exit belt conveyor and the lower straight portion of the said closed envelope. In known apparatus, the control of such spacing is carried out by vertical movement of the roller mechanism only. Such movement of the roller mechanism, however, naturally results in a change in the vertical spacing between the upper flight of the entrance belt conveyor and the above-mentioned lower straight portion. Consequently, if such spacing becomes too large, the strip of dough conveyed by the entrance belt conveyor tends to be wholly or partially out of contact with the rollers moving along their lower straight run, while if such space becomes too small the strip of dough tends to contact the rollers of the roller mechanism before they reach the lower straight run. Both of these circumstances will result in unsatisfactory dough stretching, and thus such a spacing control as this, relying only on vertical adjustment of the roller mechanism, is applicable only to cases where the thickness of the strip of dough supplied to the apparatus is within a limited range.

One solution to this difficulty, proposed by the present invention, is to make the upper flight of the entrance belt conveyor pivotable up and down or movable vertically, so that the rollers moving along their lower straight run can be brought into proper contact with a strip of dough of whatever thickness conveyed by the entrance belt conveyor.

Such an improvement can meet the requirements of providing simultaneously not only a desired vertical spacing between the upper flight of the exit belt conveyor and the said lower straight portion of the roller envelope, by adjusting the roller mechanism in known fashion, but also a desired vertical spacing between the upper flight of the entrance belt conveyor and the said lower straight portion.

It will readily be understood that such requirements can also be met by changing the positions of the upper flights of both the entrance and exit belt conveyors, while the position of the roller mechanism is held unchanged.

If circumstances require, it is also possible to meet the said requirements by first vertically adjusting the roller mechanism to provide a desired spacing between the lower straight portion thereof and the upper flight of the entrance belt conveyor, without moving the latter, in dependence on the thickness of the strip of dough to be fed into the apparatus; and then by vertically adjusting the upper flight of the exit belt conveyor to conform the vertical spacing between the said lower straight portion and the upper flight of the exit belt conveyor to a desired thickness of the dough sheet to be discharged out of the apparatus.

Thus viewed from a first aspect the present invention provides an apparatus as already set forth above in connection with the prior art, characterized in that, of the roller mechanism and the said upper flights of the entrance and the exit belt conveyors, at least two of such three parts are arranged to be positionally adjustable in the vertical direction, each independently of the other, so as to provide a desired vertical spacing between the starting point of the said lower straight portion, or points adjacent thereto on the said envelope, and the upper flight of the entrance belt conveyor, and/or a desired vertical spacing between the upper flight of the exit belt conveyor and the said lower straight portion, depending on the thickness of the strip of dough to be fed into the apparatus and the desired thickness of the sheet of dough to be discharged out of the apparatus.

In circumstances where there is no necessity for changing the thickness of the dough sheet to be discharged and only the thickness of the strip of dough fed into the apparatus is variable, the upper flight of the entrance belt conveyor can be the only member whose position is vertically adjustable.

Thus viewed from another aspect of the present invention provides an apparatus again as set forth above, characterized in that the said upper flight of the entrance belt conveyor is positionally adjustable so as to provide a desired vertical spacing between the starting point of the said lower straight portion, or points adjacent thereto on the said envelope, and the upper flight of said entrance belt conveyor, depending on the thickness of the strip of dough to be fed into the apparatus.

In a dough stretching apparatus of this kind, the strip of dough discharged out of the apparatus is usually formed so as to have substantially the same width as the strip of dough fed into the apparatus. It is possible, however, to produce a stretched sheet having a width different from that of the unstretched strip.

Viewed from yet another aspect the present invention provides a method of continuously stretching dough, comprising:

(a) feeding a strip of dough onto the upper flight of an entrance belt conveyor constituting the first in a series of at least two belt conveyors;

(b) applying pulling forces to the strip of dough by moving each of said series of belt conveyors at a speed greater then the adjacent upstream belt conveyor, while the strip of dough is repeatedly contacted by a plurality of freely rotatable rollers moving along a lower straight portion of an endless roller path, which extends above said series of belt conveyors, and along which the rollers are moved in unison in the same direction as the strip of dough but at a speed greater than those of the belt conveyors; and

(c) discharging the stretched dough by means of an exit belt conveyor constituting the last in said series of belt conveyors, the upper flight of the exit belt conveyor being located substantially parallel to the said lower straight portion of a closed envelope which is formed by the outer peripheral parts of the rollers moving along the said endless roller path; characterised by:

(d) setting a vertical spacing between the said upper flight of the exit belt conveyor and said lower straight portion of the endless roller path so as to obtain the desired thickness of the stretched dough sheet to be discharged, taking the restoring force of the dough into consideration;

(e) setting the speed of the exit belt conveyor at a desired value;

(f) measuring the thickness of the strip of dough to be fed into the system;

(g) adjusting the vertical spacing between the said upper flight of the entrance belt conveyor and the starting point of the said lower straight portion, or points adjacent thereto on the said envelope, so as to conform to the thickness of the strip of dough to be fed in; and

(h) controlling the speed of the entrance belt conveyor in proportion to the ratio of the desired thickness of the sheet of dough to be discharged to the thickness of the strip of dough to be fed in.

In circumstances where the resilience of the dough being stretched is substantially zero, the thickness of the dough sheet to be produced is practically equal to the vertical spacing between the upper flight of the exit belt conveyor and the lower straight portion of the roller envelope. However, if the dough is very resilient, the thickness of the dough sheet to be produced is slightly greater than such spacing.

Some embodiments of the invention will now be described by way of example and with reference to the accompanying drawings, in which:

Figure 1 is a schematic side view of a known apparatus, in which neither a roller mechanism nor the upper flights of the entrance and exits belt conveyors is arranged to be positionally adjustable;

Figures 2 and 3 are schematic side views of another known apparatus, in which only the roller mechanism is arranged to be adjustable;

Figure 4 is a schematic side view, partially broken away, of a first embodiment of an apparatus according to the present invention;

Figure 5 is a schematic side view, partially broken away, of a second embodiment of the invention; and

Figure 6 is a block diagram illustrating the operation of the apparatus.

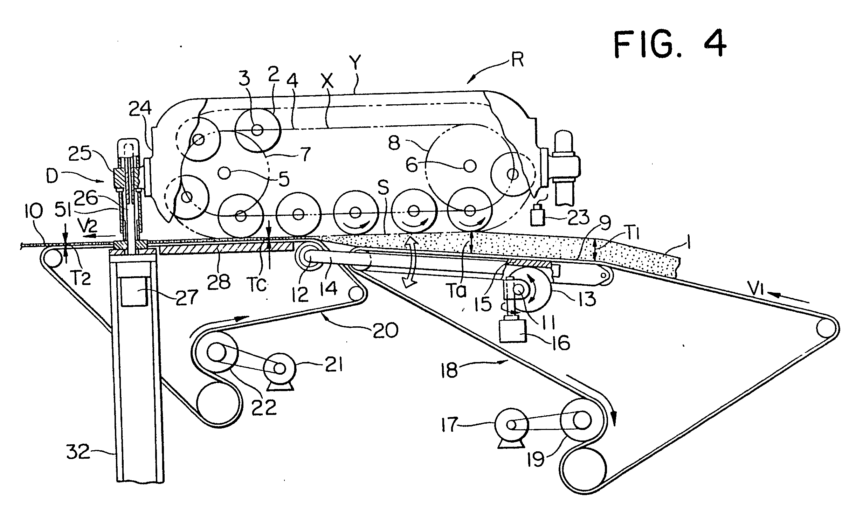

Referring to the embodiment of Figure 4, an apparatus according to the present invention comprises a roller mechanism R and a belt conveyor mechanism. The roller mechanism R comprises a plurality of rollers 2, each freely rotatably mounted on a shaft 3. The shafts 3 are attached to a chain 4, which is trained under tension around a pair of sprockets 7 and 8 mounted on shafts 5 and 6 respectively. These sprockets in turn are mounted on a frame 24. The shafts 3, and thereby the rollers 2, are thus movable around an orbit X. During such movement of the rollers 2, the path of movement of the peripheries of the rollers defines a closed envelope as indicated by Y. The roller mechanism R is constructed so that the envelope Y has a lower straight portion S.

The belt conveyor mechanism is composed of two belt conveyors, namely an entrance belt conveyor 18 for feeding a strip of dough 1 into the apparatus, and an exit belt conveyor 20 for discharging the stretched sheet of dough from the apparatus. The upper flights 9 and 10 of the entrance and exit belt conveyors 18 and 20 underlie the roller mechanism R. Although the belt conveyor mechanism is illustrated as having two belt conveyors, it may be composed of any plural number of such conveyors. The upper flights of all of the belt conveyors are arranged in series, and the speed of each of the conveyors is faster than that of the next upstream conveyor, in operation.

The upper flight 9 of the entrance belt conveyor 18 is supported by a conveyor plate 15. The plate 15 is connected to an arm 14, the downstream end 12 of which is pivoted on the shaft of a roller of the exit belt conveyor 20, so that the inclination of the plate 15 can be changed relative to the lower straight portion S of the roller mechanism R.

A cam 13 engages the underside of the plate 15 at its upstream end portion, the cam being mounted eccentrically on a shaft 11 which is rotatable about its axis by a motor 16 through gear means interconnecting these members. Thus, the upper flight 9 of the conveyor 18 can have its inclination changed by rotation of the eccentric cam 13, to increase or decrease the spacing Ta between the upper flight 9 and the lower straight portion S of the roller mechanism R. It should be noted throughout the description that the spacing Ta just mentioned corresponds to the distance between the top surface of the upper flight 9 and the starting point of the lower straight portion S, or points adjacent thereto, of the envelope Y.

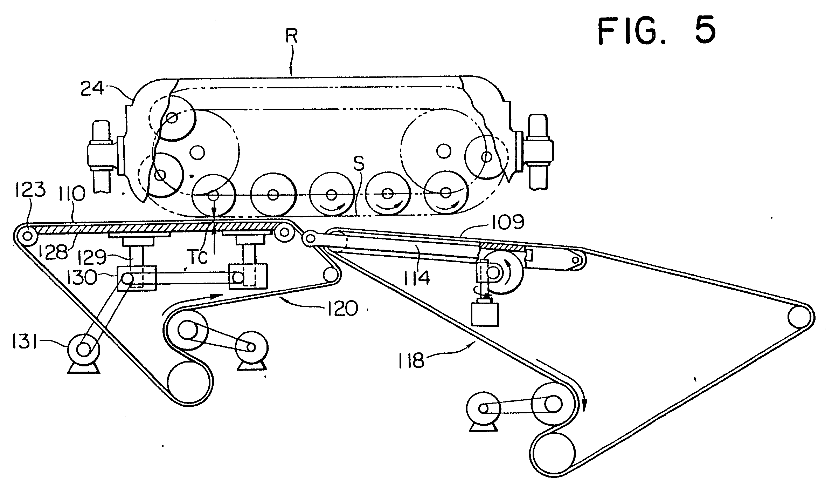

Although in the illustrated embodiment the upper flight 9 of the conveyor 18 is located in tapering relationship to the lower straight portion S of the roller mechanism R, and that the inclination of the said upper flight 9 is arranged to be changeable, the upper flight 9 may alternatively be arranged parallel to the lower straight portion S and be movable only in the vertical direction, without changing its angle relative to the portion S, for example by means of a device which will be described hereinafter with respect to the movement of the upper flight 10 of the exit belt conveyor 20 in Figure 5.

The entrance belt conveyor 18 is driven by a roller 19 which is in turn driven by a variable speed motor 17 whose speed is arranged to be variable in response to external signals, whilst the exit belt conveyor 20 is driven by a drive roller 22 which is in turn driven by a motor 21.

Reference numeral 23 designates a sensor for measuring the thickness $T_1$ and the width $W_1$ of strip of dough 1 fed into the apparatus.

The roller mechanism R is supported by a pair of said frames 24 positioned at its respective opposite sides, and each frame 24 is integrally connected to a pair of vertical shifting devices D, at at its front and rear ends respectively, by way of brackets 25 which form part of the devices D. A post 26 extends vertically through the centre of each device D, and is in threaded engagement with the bracket 25. A casing 51 of the device D is secured to the bracket 25, and is in telescopic sliding engagement with a base part 52, which is securely connected to an outer frame 32 of the belt conveyor mechanism. The post 26 is rotatable about its axis by a motor 27.

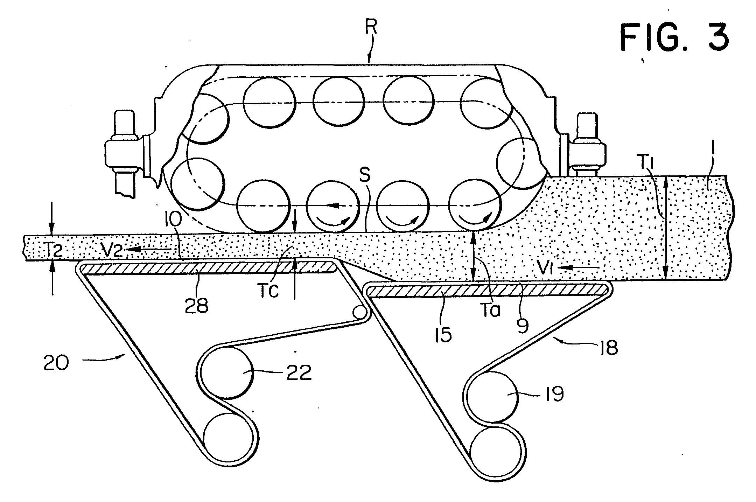

In the known apparatus shown in Figures 2 and 3, a roller mechanism R is arranged to be moved vertically by devices similar to the devices D of Figure 4, but both the upper flight 9 of the entrance belt conveyor 18 and the upper flight 10 of the exit belt conveyor 20 are fixedly and immovably mounted. Therefore, when a desired thickness of dough sheet is to be produced, the roller mechanism R is moved vertically to set the spacing Tc between the upper flight of the exit belt conveyor 20 and the lower straight portion S of the roller mechanism R. Such vertical movement of the roller mechanism R also changes the spacing Ta, since the position of the upper flight 9 of the entrance belt conveyor 10 is held unchanged. It is a rare occurrence for the spacing Ta, as so set, to come close to the thickness $T_1$ of the strip of dough fed into the apparatus, as will readily be seen from Figures 2 and 3, Figures 2 showing a case where the spacing Ta is too large and Figure 3 a case where it is too small. These circumstances will not change even if the upper flight 9 of the entrance belt conveyor 18 is fixedly located in a tapering relationship with the lower straight portion S of the roller mechanism R.

The embodiments of Figure 4 overcomes these difficulties of the known apparatus exemplified in Figures 2 and 3. Thus the change in the spacing Ta, which is caused in the known apparatus by the vertical movement of the roller mechanism R, can readily be compensated for by pivoting the upper flight 9 of the entrance belt conveyor 18, so as to conform the spacing Ta to the thickness $T_1$ of the strip of dough to be fed into the apparatus.

It will readily be understood that such adjustment of the spacing Ta can also be effect merely by moving the upper flight 9 vertically without pivoting it, although no means for carrying out such an operation is shown in the drawing. It will also be clear that such a procedure of pivoting (as well as vertically moving) the upper flight 9 can be applied to circumstances where the upper flight 9 is originally positioned parallel to the lower straight portion S of the roller mechanism R.

In another embodiment of the invention, shown in Figure 5, the upper flight 110 of an exit belt conveyor 120 is arranged to be movable vertically, in addition to the upper flight 109 of an entrance belt conveyor 118 being pivotable similarly to the device of Figure 4. The only difference in structure between the entrance belt conveyors of Figures 4 and 5 is that a conveyor plate supporting arm 114 in Figure 5 is pivoted on a shaft which is mounted on the outer frame 32 of the belt conveyor mechanism, whilst in Figure 4 the arm 14 is pivoted on the shaft of one of the rollers of the exit belt conveyor 20.

In the Figure 5 embodiment the setting of the spacing Tc is carried out by vertically adjusting the upper flight 110 of the exit belt conveyor 120, instead of vertically adjusting of the roller mechanism R as in the embodiment of Figure 4.

Thus the upper flight 110 is supported by a conveyor plate 128, the opposite ends of which are curved in order that the conveyor belt can run smoothly therearound. The ends are in fact formed by rollers 123 whose shafts are attached to the plate 128. The plate 128 is mounted on shafts 129 which are vertically movable by means of a motor 131 driving through gearing 130.

It will thus be understood that in apparatus according to the present invention, a desired spacing Ta and/or a desired spacing Tc can be set by vertically adjusting the roller mechanism R and one of the upper flights of the entrance and exit belt conveyors, or alternatively by moving the upper flights of both the entrance and exit belt conveyors.

Another feature of the present invention will be be explained.

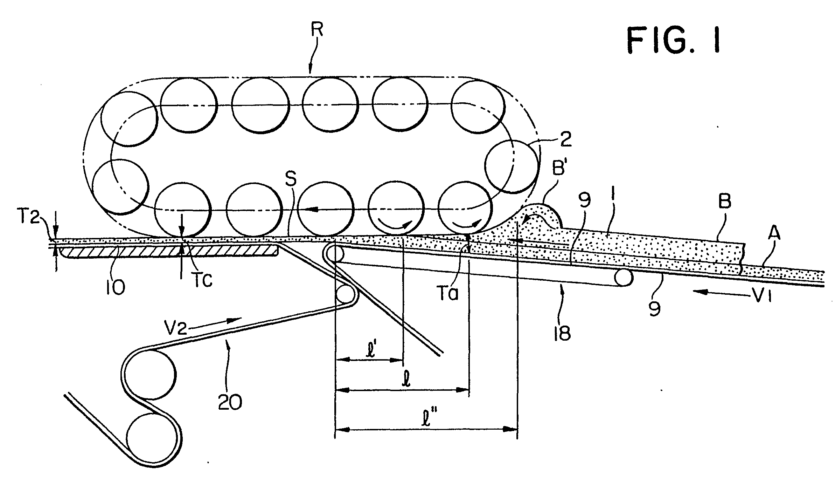

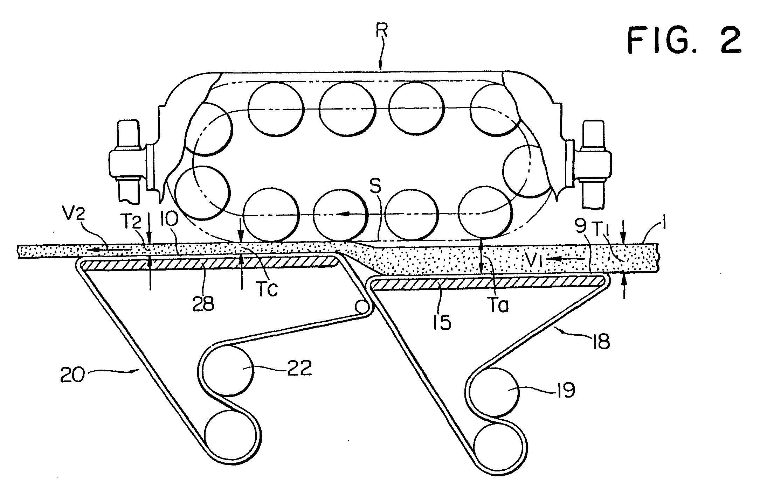

In another known apparatus, shown in Figure 1, neither the roller mechanism R nor the upper flight 9 and 10 of the entrance and exit belt conveyors, is provided with any means for moving them. In other words, neither the spacing Ta nor the spacing Tc is arranged to be adjustable.

In use of such known apparatus, if a strip of dough A fed into the apparatus is so thin that the dough strip on the upper flight 9 of the entrance belt conveyor 18 can contact the rollers 2 only over the length $1'$ as seen in Figure 1, the rolling distance over which the rollers 2 are effective is too short to sufficiently stretch the dough. In such a case, the strip of dough becomes uneven in thickness, and it may consequently be torn apart at the space between the upper flights 9 and 10 of the entrance and exit belt conveyors 18 and 20, or it may stick to the upper flight 10.

If on the other hand a strip of dough B fed into the apparatus is so thick that the dough strip on the upper flight 9 comes into contact with the rollers 2 before they begin their lower straight run, thereby resulting in an unnecessarily long contact length $1''$ as also seen in Figure 1, a protuberance B' will appear on the strip of dough B. This results in turbulent flow in the dough, whereby the dough will be subjected to undesirably great stress. Furthermore, the strip of dough may be spread in the widthwise direction while passing along the upper flight 9 of the entrance belt conveyor 18. As a result, a dough sheet of a good quality and a uniform width will not be produced.

In circumstances where it is not required to produce stretch dough sheets of different thicknesses, and if the thickness of the strip of dough to be fed into the apparatus is varied, the above-mentioned problems inherent in the known apparatus of Figure 1 can be overcome simply by constructing the entrance belt conveyor 18 so that is upper flight 9 is positionally adjustable. Although such an embodiment is not illustrated, it will readily be understood that the upper flight 9 of the entrance belt conveyor 18 of Figure 1 can be arranged to be pivotally adjustable by means similar to that shown in Figures 4 and 5, so that the spacing Ta can then be controlled to match the thickness of the strip of dough to be fed into the apparatus, thereby attaining the desired rolling distance $1$. Thus a constant relationship can be maintained between the width $W_1$ of the strip of dough fed into the apparatus and that $W_2$ of the dough sheet produced by the apparatus.

It will also readily be understood that the upper flight 9 of the entrance belt conveyor 18 may be positioned parallel to the lower straight portion S of the roller mechanism R, in place of the arrangement shown in Figure 1, and that the upper flight 9 can then be modified, without any difficulty, to be vertically movable similarly to the upper flight 10 of the exit belt conveyor 120 in the embodiment of Figure 5.

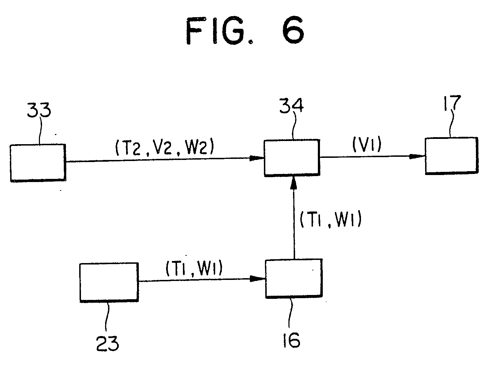

The operation of an apparatus according to the present invention will now be further explained with reference to Figures 4 and 6.

First, the thickness $T_2$ of the dough sheet to be produced is determined, and the spacing Tc is set, taking the resilience or restoring property of the dough into consideration, by rotating the motors 27 to vertically adjust the roller mechanism R. Here it should be noted that when the dough resilience is substantially zero, $T_2$ is practically equal to Tc, whilst that when the dough is very resilient, $T_2$ is slightly greater than Tc. Therefore, when the product requires high precision in its thickness, $T_2$ should be carefully set after precisely measuring the resilience of the dough.

Next, the speed $V_2$ and width $W_2$ of the dough sheet to be carried away by the exit belt conveyor 20 are determined. $V_2$ is substantially equal to the speed of the exit conveyor belt, when the dough resilience is substantially zero. When the dough is more resilient, however, $V_2$ is slightly less than the speed of the exit conveyor belt.

The values $T_2$, $V_2$, and $W_2$ are now fed to an input unit 33, as input data. Then, the sensor 23 measures the thickness $T_1$ and width $W_1$ of the strip of dough conveyed by the entrance belt conveyor 18 and transmits such information to the motor 16. The motor 16 rotates in response to the feeding of the information of the thickness $T_1$, thereby causing the plate 15 to move vertically until the spacing Ta becomes equal to the dough thickness $T_1$.

The above data $T_1$, $T_2$, $V_2$, $W_1$ and $W_2$ are fed to a computer 34. When the dough resilience is substantially zero, $V_1 \times T_1 \times W_1$ is substantially equal to $V_2 \times T_2 \times W_2$. Therefore, $V_2$ is automatically calculated by the computer 34 from the equation. A signal indicative of $V_1$ is transmitted from the computer 34 to the variable speed motor 17, thereby determining the speed of the entrance belt conveyor 18.

The operation of the apparatus shown in Figure 5 is similar to that of Figure 4, except that the thickness $T_2$ is determined by rotating the motor 131 to vertically adjust the conveyor plate 128, while the thickness $T_2$ in the apparatus in Figure 4 is adjusted by the vertical movement of the roller mechanism R.

It will be readily understood that an apparatus according to the invention in which the upper flight of the entrance belt conveyor is the only member arranged to be adjustable, can also be operated similarly to the above.

In cases where the dough resilience is substantially zero, assuming $W_1=W_2$, the relation $V_1 \times T_1 = V_2 \times T_2$ holds. It can be seen in this case that the dough flows regularly through the apparatus while maintaining a uniform width, and therefore dough can be stretched without generating any substantial turbulence therein.

Further, when it is desired to increase the width $W_2$ relative to $W_1$, assuming both $T_1$ and $T_2$ are unchanged, a larger value should be selected for $V_1$ to satisfy the relation $V_1 \times T_1 > V_2 \times T_2$, since $W_2 > W_1$ in the equation $V_1 \times T_1 \times W_1 = V_2 \times T_2 \times W_2$. The above relation can be inversed to provide the relation $W_2 < W_1$. Thus a dough sheet produced can have a predetermined width.

In cases where the dough is resilient, a dough sheet having a desired thickness and/or width can be produced by including a resiliency coefficient peculiar to the dough in question, in the above equation.

It will be understood from the foregoing description that in use of apparatus according to the present invention, the spacing between the upper flight of the entrance belt conveyor and the lower straight portion of the roller mechanism can be changed to conform to the thickness of the strip of dough to be fed into the apparatus, whereby to stabilize the dough stretching effect.

Also, in use of apparatus according to the invention, the ratio between the spacing Tc between the upper flight of the exit belt conveyor and the lower straight portion S of the roller mechanism and the spacing Ta between the upper flight of the entrance belt conveyor and the lower straight portion S of the roller mechanism is measured, the spacing Tc being adjusted if necessary to take the dough resilience into consideration, and depending on the value of this ratio, the ratio of the speed $V_2$ of the exit belt conveyor to the speed $V_1$ of the entrance belt conveyor is automatically set to satisfy the relation $V_1 \times T_1 = V_2 \times T_2$, $V_1 \times T_1 > V_2 \times T_2$, or $V_1 \times T_1 < V_2 \times T_2$, thereby substantially eliminating the instability of the dough stretching effect which is inherent in the prior art apparatus, increasing the flexibility of the apparatus to accommodate itself to wide ranges of thickness and width of a dough sheet to be stretched, and generally facilitating operation of the apparatus.

## Claims

1. Apparatus for continuously stretching a strip of dough, comprising:

a belt conveyor mechanism comprising a series of at least two belt conveyors the upper flights of which are adapted to underlie and support the strip of dough to carry it along a predetermined path, said series of belt conveyors including an entrance belt conveyor for feeding the strip of dough into the apparatus, and an exit belt conveyor for discharging the stretched sheet of dough from the apparatus, the exit belt conveyor being movable faster than the entrance belt conveyor; and

a roller mechanism comprising a plurality of freely rotatable rollers movable in unison along an endless roller path, the outer peripheral parts of the moving rollers forming a closed envelope having a lower straight portion spaced from and above the upper flights of said series of belt conveyors so that the rollers contact the strip of dough during their movement along said lower straight portion, the rollers being arranged to move in the same direction as the strip of dough when passing along said lower straight portion but at a speed greater than that of the said strip;

the upper flight of the said exit belt conveyor being located substantially parallel to said lower straight portion to define a predetermined vertical spacing therebetween; and

the upper flight of the entrance belt conveyor being located either parallel to, or in a tapering relationship with, said lower straight portion to define a predetermined vertical spacing between the starting point of said lower straight portion, or points adjacent thereto on the said envelope, and the upper flight of the entrance belt conveyor; characterized in that

of the roller mechanism (R) and the said upper flights (9, 10) of the entrance and exit belt conveyors (18, 20), at least two of the such three parts are arranged to be positionally adjustable in the vertical direction, each independently of the other, so as to provide a desired vertical spacing (Ta) between the starting point of the said lower straight portion (S), or points adjacent thereto on the said envelope, and the upper flight of the entrance belt conveyor, and/or a desired vertical spacing (Tc) between the upper flight of the exit belt conveyor and the said lower straight portion, depending on the thickness ($T_1$) of the strip of dough to be fed into the apparatus and the desired thickness ($T_2$) of the sheet of dough to be discharged out of apparatus.

2. Apparatus according to claim 1, wherein the said upper flight (9) of the entrance belt conveyor (18) is arranged to either pivot up and down or to move vertically.

3. Apparatus according to claim 1 to 2, wherein the said upper flight (1) of the exit belt conveyor (20) is arranged to move vertically.

4. Apparatus according to any of claims 1 to 3, wherein the said roller mechanism (R) is arranged to move vertically.

5. Apparatus for continuously stretching a strip of dough comprising:

a belt conveyor mechanism comprising a series of at least two belt conveyors the upper flights of which are adapted to underlie and support the strip of dough to carry it along a predetermined path, said series of belt conveyors including an entrance belt conveyor for feeding the strip of dough into the apparatus, and an exit belt conveyor for discharging the stretched sheet of dough from the apparatus, the exit belt conveyor being movable faster than the entrance belt conveyor; and

a roller mechanism comprising a plurality of freely rotatable rollers movable in unison along an endless roller path, the outer peripheral parts of the moving rollers forming a closed envelope having a lower straight portion spaced from and above the upper flights of said series of belt conveyors so that the rollers contact the strip of dough during their movement along said lower straight portion, the rollers being arranged to move in the same direction as the strip of dough when passing along said lower straight portion but at a speed greater than that of the said strip;

the upper flight of the said exit belt conveyor being located substantially parallel to said lower straight portion to define a predetermined vertical spacing therebetween; and

the upper flight of the entrance belt conveyor being located either parallel to, or in a tapering relationship with, said lower straight portion to define a predetermined vertical spacing between the starting point of said lower straight portion, or points adjacent thereto on the said envelope, and the upper flight of the entrance belt conveyor; characterized in that

the said upper flight (9) of the entrance belt conveyor (18) is positionally adjustable so as to provide a desired vertical spacing (Ta) between the starting point of said lower straight portion, or points adjacent thereto on the said envelope, and the upper flight (9) of said entrance belt conveyor (18), depending on the thickness ($T_1$) of the strip of dough to be fed into the apparatus.

6. Apparatus according to claim 5, wherein the said upper flight (9) of the entrance belt conveyor (18) is arranged to either pivot up and down or to move vertically.

7. Apparatus according to any of the preceding claims, wherein the ratio of the speed of the entrance belt conveyor (18) to that of the exit belt conveyor (20) is variable depending on the vertical spacing (Ta) between the starting point of the said lower straight portion, or points adjacent thereto on the said envelope, and the upper flight (9) of the entrance belt conveyor (18), and/or the vertical spacing (Tc) between the upper flight (10) of the exit belt conveyor (20) and the said lower straight portion (S).

8. A method for continuously stretching dough, comprising:

(a) feeding a strip of dough onto the upper flight of an entrance belt conveyor constituting the first in a series of at least two belt conveyors;

(b) applying pulling forces to the strip of dough by moving each of said series of belt conveyors at a speed greater than the adjacent upstream belt conveyor, while the strip of dough is repeatedly contacted by a plurality of freely rotatable rollers moving along a lower straight portion of an endless roller path, which extends above said series of belt conveyors, and along which the rollers are moved in unison in the same direction as the strip of dough but at a speed greater than those of the belt conveyors; and

(c) discharging the stretched dough by means of an exit belt conveyor constituting the last in said series of belt conveyors, the upper flight of the exit belt conveyor being located substantially parallel to the said lower straight portion of a closed envelope which is formed by the outer peripheral parts of the rollers moving along the said endless roller path; characterised by:

(d) setting a vertical spacing (Tc) between the said upper flight (10) of the exit belt conveyor (20) and said lower straight portion (S) of the endless roller path so as to obtain the desired thickness ($T_2$) of the stretched dough strip to be discharged, taking the restoring force of the dough into consideration;

(e) setting the speed ($V_2$) of the exit belt conveyor (20) at a desired value;

(f) measuring the thickness ($T_1$) of the strip of dough to be fed into the system;

(g) adjusting the vertical spacing between the said upper flight (9) of the entrance belt conveyor (18) and the starting point of the said lower straight portion (S), or points adjacent thereto on the said envelope, so as to conform to the thickness ($T_1$) of the strip of dough to be fed in; and

(h) controlling the speed ($V_1$) of the entrance belt conveyor (18) in proportion to the ratio of the desired thickness ($T_2$) of the sheet of dough to be discharged to the thickness ($T_1$) of the strip of dough to be fed in.

**Patentansprüche**

1. Vorrichtung zum kontinuierlichen Dehnen eines Teigstreifens, umfassend:

einen Bandfördermechanismus umfassend eine Serie von mindestens zwei Bandförderern, deren obere Bandstraßen so gestaltet sind, daß sie unter dem Teigstreifen liegen und diesen stützen, um ihn entlang einer vorbestimmten Bahn zu tragen, wobei diese Serie von Bandförderern einen Eingangsbandförderer zum Zuführen des Teigstreifens in die Vorrichtung und einen Ausgangsbandförderer zum Austrag der gedehnten Teigbahn aus der Vorrichtung umfaßt, wobei der Ausgangsbandförderer schneller beweglich als der Eingangsbandförderer ist; und

einen Rollenmechanismus umfassend eine Vielzanl von frei drehbaren Rollen, die im Einklang entlang einer endlosen Rollenbahn bewegbar sind, wobei die äußeren Umfangsteile der sich bewegenden Rollen eine geschlossene Hülle mit einem unteren geraden Abschnitt, der sich im Abstand von und über den oberen Bandstraßen der Bandförderer befindet, bilden, sodaß die Rollen den Teigstreifen während ihrer Bewegung entlang des unteren geraden Abschnitts berühren, wobei die Rollen so angeordnet sind, daß sie sich in dieselbe Richtung wie der Teigstreifen bewegen, wenn sie sich entlang des unteren geraden Abschnitts fortbewegen, jedoch eine größere Geschwindigkeit als der Streifen haben;

wobei die obere Bandstraße des Ausgangsbandförderers im wesentlichen parallel zum unteren geraden Abschnitt angeordnet ist, um einen vorbestimmten Vertikalabstand dazwischen zu begrenzen; und

wobei die obere Bandstraße des Eingangsbandförderes entweder parallel oder spitz zulaufend zum unteren geraden Abschnitt zur Begrenzung eines vorbestimmten Vertikalabstandes zwischen dem Ausgangspunkt des unteren geraden Abschnitts oder daneben befindlichen Punkten an dieser Hülle und der oberen Bandstraße des Eingangsbandförderers; dadurch gekennzeichnet,

daß vom Rollenmechanismus (R) und den oberen Bandstraßen (9, 10) des Eingangs- und Ausgangsbandförderes (18, 20) zumindest zwei dieser drei Teile so angeordnet sind, daß sie jeweils voneinander unabhängig in vertikaler Richtung in ihrer Position einstellbar sind, um einen gewünschten Vertikalabstand (Ta) zwischen dem Ausgangspunkt des unteren geraden Abschnitts (S) oder daneben befindlichen Punkten an der Hülle und der oberen Bandstraße des Eingangsbandförderers und/oder einen gewünschten Vertikalabstand (Tc) zwischen der oberen Bandstraße des Ausgangsbandförderers und dem unteren geraden Abschnitt, je nach der Dicke (T$_1$) des in die Vorrichtung einzuführenden Teigstreifens und der gewünschten Dicke (T$_2$) der aus der Vorrichtung auszugebenden Teigbahn zu schaffen.

2. Vorrichtung nach Anspruch 1, worin die obere Bandstraße (9) des Eingangsbandförderers (18) so angeordnet ist, daß sie entweder auf- und abschwenkt oder sich vertikal bewegt.

3. Vorrichtung nach Anspruch 1 bis 2, worin die obere Bandstraße (1) des Ausgangsbandförderers (20) vertikal beweglich angeordnet ist.

4. Vorrichtung nach einem der Ansprüche 1 bis 3, worin der Rollenmechanismus (R) vertikal beweglich angeordnet ist.

5. Vorrichtung zum kontinuierlichen Dehnen eines Teigstreifens, umfassend:

einen Bandfördermechanismus umfassend eine Serie von zumindest zwei Bandförderern, deren obere Bandstraßen so gestaltet sind, daß sie unter dem Teigstreifen liegen und ihn stützen, um ihn entlang einer vorgegebenen Bahn zu tragen, wobei die Serie der Bandförderer einen Eingangsbandförderer zum Zuführen des Teigstreifens in die Vorrichtung und einen Ausgangsbandförderer zum Austrag der gedehnten Teigbahn aus der Vorrichtung umfaßt, wobei der Ausgangsbandförderer schneller bewegbar ist als der Eingangsbandförderer; und

einen Rollenmechanismus, umfassend eine Vielzahl von frei drehbaren Rollen, die im Einklang entlang einer endlosen Rollenbahn bewegbar sind, wobei die äußeren Umfangsteile der sich bewegenden Rollen eine geschlossene Hülle mit einem geraden unteren Abschnitt im Abstand von und über den oberen Bandstraßen der Serie von Bandförderern bilden, sodaß die Rollen den Teigstreifen während ihrer Bewegung entlang dem unteren geraden Abschnitt berühren, wobei die Rollen so angeordnet sind, daß sie sich in dieselbe Richtung wie der Teigstreifen bewegen, wenn sie sich entlang des unteren geraden Abschnitts, jedoch mit einer höheren Geschwindigkeit als der Streifen fortbewegen;

wobei die obere Bandstraße des Ausgangsbandförderers im wesenlichen parallel zum unteren geraden Abschnitt angeordnet ist, um einen vorbestimmten vertikalen Abstand dazwischen zu begrenzen; und

wobei die obere Bandstraße des Eingangsbandförderers entweder parallel oder spitz zulaufend zum unteren geraden Abschnitt angeordnet ist, um einen vorbestimmten Vertikalabstand zwischen dem Ausgangspunkt des unteren geraden Abschnitts oder dazu benachbarten Punkten an der Hülle und der oberen Bandstraße des Eingangsbandförderers zu begrenzen; dadurch gekennzeichnet,

daß die obere Bandstraße (9) des Eingangsbandförderers (18) in ihrer Position einstellbar ist, um einen gewünschten Vertikalabstand (Ta) zwischen dem Ausgangspunkt des unteren geraden Abschnitts oder dazu benachbarten Punkten an der Hülle und der oberen Bandstraße (9) des Eingangsbandförderes (18) vorzusehen, je nach der Dicke (T$_1$) des in die Vorrichtung einzuführenden Teigstreifens.

6. Vorrichtung nach Anspruch 5, worin die obere Bandstraße (9) des Eingangsbandförderers (18) so angeordnet ist, daß sie entweder auf- und abschwenkt oder sich vertikal bewegt.

7. Vorrichtung nach einem der vorhergehenden Ansprüche, worin das Verhältnis der Geschwindigkeit des Eingangsbandförderers (18) zu der des Ausgangsbandförderers (20) in Abhängigkeit vom Vertikalabstand (Ta) zwischen dem Ausgangspunkt des unteren geraden Abschnitts oder benachbarten Punkten an der Hülle und der oberen Bandstraße (9) des Eingangsbandförderers (18) und/oder dem Vertikalabstand (Tc) zwischen der oberen Bandstraße (10) des Ausgangsbandförderers (20) und dem unteren geraden Abschnitt (S) variabel ist.

8. Verfahren zum kontinuierlichen Dehnen von Teig, umfassend:

(a) das Zuführen eines Teigstreifens auf die obere Bandstraße eines Eingangsbandförderers, welcher der erste in einer Serie von mindestens zwei Bandförderern ist;

(b) das Aufbringen von Zugkräften auf den Teigstreifen, indem jeder der Serie von Bandförderern mit einer höheren Geschwindigkeit als der stromauf benachbarte Bandförderer bewegt wird, während der Teigstreifen wiederholt von einer Vielzahl von frei drehbaren Rollen berührt wird, die sich entlang eines unteren geraden Abschnitts einer endlosen Rollenbahn bewegen, die sich über der Serie von Bandförderern erstreckt und entlang welcher die Rollen im Einklang in dieselbe Richtung wie der Teigstreifen, jedoch mit einer höheren Geschwindigkeit als die Bandförderer, bewegt werden; und

(c) das Austragen des gedehnten Teiges mittels eines Ausgangsbandförderers, der den letzten in der Serie von Bandförderern bildet, wobei die obere Bandstraße des Ausgangsbandförderes im wesentlichen parallel zum unteren geraden Abschnitt einer geschlossenen Hülle, die durch die äußeren Umfangsteile der sich entlang der endlosen Rollenbahn bewegenden Rollen gebildet ist, angeordnet ist; gekennzeichnet durch:

(d) das Einstellen eines Vertikalabstandes (Tc) zwischen der oberen Bandstraße (10) des Ausgangsbandförderes (20) und dem geraden unteren Abschnitt (S) der endlosen Rollenbahn zum Erhalt der gewünschten Dicke (T$_2$) des gedehnten,

auszutragenden Teigstreifens, wobei die Rückstellkraft des Teigs berücksichtigt wird;

(e) das Einstellen der Geschwindigkeit ($V_2$) des Ausgangsbandförderers (20) auf einen gewüschten Wert;

(f) das Messen der Dicke ($T_1$) des in das System einzuführenden Teigstreifens;

(g) das Einstellen des Vertikalabstandes zwischen der oberen Bandstraße (9) des Eingangsbandförderers (18) und dem Ausgangspunkt des unteren geraden Abschnitts (S) oder daneben befindlichen Punkten an der Hülle, sodaß er mit der Dicke ($T_1$) des einzuführenden Teigstreifens übereinstimmt; und

(h) die Steuerung der Geschwindigkeit ($V_1$) des Eingangsbandförderers (18) proportional zum Verhältnis der gewünschten Dicke ($T_2$) der auszutragenden Teigbahn zur Dicke ($T_1$) des einzuführenden Teigstreifens.

**Revendications**

1. Appareil destiné à étirer en continu une bande de pâte, comprenant:

un mécanisme de transport à bande comprenant une série d'au moins deux bandes transporteuses dont les lignes supérieures sont adaptées à soutenir et supporter la bande de pâte pour la véhiculer le long d'un trajet prédéterminé, ladite série de bandes transporteuses comprenant une bande transporteuse d'entrée destinée à introduire la bande de pâte dans l'appareil, et une bande transporteuse de sortie destinée à décharger de l'appareil la feuille de pâte étirée, la bande transporteuse de sortie pouvant être mobile plus rapidement que la bande transporteuse d'entrée; et

un mécanisme de roulement comprenant plusieurs rouleaux pouvant tourner librement, mobiles simultanément le long d'un transporteur sans fin à galets, les parties périphériques extérieures des rouleaux mobiles formant une enveloppe fermée comprenant une partie droite inférieure espacée, et située au-dessus, des lignes supérieures de ladite série de bandes transporteuses de sorte que les rouleaux entrent en contact avec la bande de pâte au cours de leur mouvement le long de ladite partie droite inférieure, les rouleaux étant disposés de manière à être en mouvement dans la même direction que la bande de pâte lors de son passage le long de ladite partie droite inférieure, mais à une vitesse supérieure à celle de ladite bande;

la ligne supérieure de ladite bande transporteuse de sortie étant située pratiquement parallèlement à ladite partie droite inférieure pour définir entre elles un espacement vertical prédéterminé; et

la ligne supérieure de la bande transporteuse d'entrée étant située parallèlement à, ou bien formant un rétrécissement avec, ladite partie droite inférieure pour définir un espacement vertical prédéterminé entre le point de départ de ladite partie inférieure, ou des points adjacents à celle-ci sur ladite enveloppe, et la ligne supérieure de la bande transporteuse d'entrée; caractérisé en ce que

entre le mécanisme de roulement (R) et lesdites lignes supérieures (9, 10) des bandes transporteuses d'entrée et de sortie (18, 20), au moins deux de ces trois éléments sont disposés de manière à pouvoir ajuster leur position, chacune indépendamment l'une de l'autre, dans la direction verticale, de manière à former un espacement vertical désiré (Ta) entre le point de départ de ladite partie droite inférieure (5), ou des points adjacents à celle-ci sur ladite enveloppe, et la ligne supérieure de la bande transporteuse d'entrée, et/ou un espacement vertical désiré (Tc) entre la ligne supérieure de la bande transporteuse de sortie et ladite partie droite inférieure, suivant l'épaisseur ($T_1$) de la bande de pâte à introduire dans l'appareil et l'épaisseur désirée ($T_2$) de la feuille de pâte à décharger de l'appareil.

2. Appareil suivant la revendication 1, dans lequel la ligne supérieure (9) de la bande transporteuse d'entrée (18) est disposée de manière à pivoter de haut en bas ou bien à se déplacer verticalement.

3. Appareil suivant la revendication 1 ou 2, dans lequel la ligne supérieure (1) de la bande transporteuse de sortie (20) est disposée de manière à se déplacer verticalement.

4. Appareil suivant l'une quelconque des revendications 1 à 3, dans lequel le mécanisme de roulement (R) est disposé de manière à se déplacer verticalement.

5. Appareil destiné à étirer en continu une bande de pâte, comprenant:

un mécanisme de transport à bande comprenant une série d'au moins deux bandes transporteuses dont les lignes supérieures sont adaptées à soutenir et supporter la bande de pâte pour la véhiculer le long d'un trajet prédéterminé, ladite série de bandes transporteuses comprenant une bande transporteuse d'entrée destinée à introduire la bande de pâte dans l'appareil, et une bande transporteuse de sortie destinée à décharger de l'appareil la feuille de pâte étirée, la bande transporteuse de sortie pouvant être mobile plus rapidement que la bande transporteuse d'entrée; et

un mécanisme de roulement comprenant plusieurs rouleaux pouvant tourner librement, mobiles simultanément le long d'un transporteur sans fin à galets, les parties périphériques extérieures des rouleaux mobiles formant une enveloppe fermée comprenant une partie droite inférieure espacée, et située au-dessus, des lignes supérieures de ladite série de bandes transporteuses de sorte que les rouleaux entrent en contact avec la bande de pâte au cours de leur mouvement le long de ladite partie droite inférieure, les rouleaux étant disposés de manière à être en mouvement dans la même direction que la bande de pâte lors de son passage le long de ladite partie droite inférieure mais à une vitesse supérieure à celle de ladite bande;

la ligne supérieure de ladite bande transporteuse de sortie étant située pratiquement parallèlement à ladite partie droite inférieure pour définir entre elles un espacement vertical prédéterminé; et

la ligne supérieure de la bande transporteuse d'entrée étant située parallèlement à, ou bien formant un rétrécissement avec, ladite partie droite inférieure pour définir un espacement vertical prédéterminé entre le point de départ de ladite partie droite inférieure, ou bien des points adjacents à celle-ci sur ladite enveloppe, et la ligne supérieure de la bande transporteuse d'entrée; caractérisé en ce que

il est possible d'ajuster la position de ladite ligne supérieure (9) de la bande transporteuse d'entrée (18) de manière à former un espacement vertical désiré ($T_a$) entre le point de départ de ladite partie droite inférieure, ou de points adjacents à celle-ci sur ladite enveloppe, et la ligne supérieure (9) de ladite bande transporteuse d'entrée (18), suivant l'épaisseur ($T_1$) de la bande de pâte à introduire dans l'appareil.

6. Appareil suivant la revendication 5, dans lequel ladite ligne supérieure (9) de la bande transporteuse d'entrée (18) est disposée de manière à pivoter de haut en bas ou bien à se déplacer verticalement.

7. Appareil suivant l'une quelconque des revendications précédentes, dans lequel le rapport de la vitesse de la bande transporteuse d'entrée (18) à celle de la bande transporteuse de sortie (20) est variable suivant l'espacement vertical ($T_a$) entre le point de départ de ladite partie droite inférieure, ou des points adjacents à celle-ci sur ladite enveloppe, et la ligne supérieure (9) de la bande transporteuse d'entrée (18), et/ou l'espacement vertical ($T_c$) entre la ligne supérieure (10) de la bande transporteuse de sortie (20) et ladite partie droite inférieure (S).

8. Procédé pour étirer en continu de la pâte, consistant:

(a) à introduire une bande de pâte sur la ligne supérieure d'une bande transporteuse d'entrée constituant la première bande d'une série d'au moins deux bandes transporteuses;

(b) à appliquer des forces de traction à la bande de pâte en déplaçant chacune desdites séries de bandes transporteuses à une vitesse supérieure à celle de la bande transporteuse adjacente située en amont, tandis que la bande de pâte est soumise à un contact de manière répétée par plusieurs rouleaux pouvant tourner librement, mobiles le long d'une partie droite inférieure d'un transporteur sans fin à galets, qui s'étend au-dessus de ladite série de bandes transporteuses, et le long duquel les rouleaux sont mis en mouvement simultanément dans la même direction que la bande de pâte, mais à une vitesse supérieure à celles des bandes transporteuses; et

(c) à décharger la pâte étirée au moyen d'une bande transporteuse de sortie constituant la dernière bande de ladite série de bandes transporteuses, la ligne supérieure de la bande transporteuse de sortie étant placée pratiquement parallèlement à ladite partie droite inférieure d'une enveloppe fermée qui est formée par les parties périphériques extérieures des rouleaux mobiles le long dudit transporteur sans fin à galets; caractérisé en ce qu'il consiste:

(d) à régler un espacement vertical ($T_c$) entre ladite ligne supérieure (10) de la bande transporteuse de sortie (20) et ladite partie droite inférieure (S) du transporteur sans fin à galets, de manière à obtenir l'épaisseur désirée ($T_2$) de la bande de pâte étirée à décharger, en prenant en considération la force de rappel de la pâte;

(e) à régler la vitesse ($V_2$) de la bande transporteuse de sortie (20) à une valeur désirée;

(f) à mesurer l'épaisseur ($T_1$) de la bande de pâte à introduire dans l'appareil;

(g) à ajuster l'espacement vertical entre ladite ligne supérieure (9) de la bande transporteuse d'entrée (18) et le point de départ de ladite partie droite inférieure (S), ou des points adjacents à celle-ci sur ladite enveloppe, de manière à s'adapter à l'épaisseur ($T_1$) de la bande de pâte à introduire; et

(h) à ajuster la vitesse ($V_1$) de la bande transporteuse d'entrée (18) proportionnellement au rapport de l'épaisseur désirée ($T_2$) de la feuille de pâte à décharger à l'épaisseur ($T_1$) de la bande de pâte à introduire.

FIG. 1

# FIG. 2

FIG. 3

FIG. 4

FIG. 5

EP 0 128 015 B1

# FIG. 6